# FASCICULE DE BREVET EUROPEEN

(11) **EP 1 200 292 B1**
(45) Date de publication et mention de la délivrance du brevet: **25.02.2004**
(21) Numéro de dépôt: 00958630.6
(22) Date de dépôt: 27.07.2000
(51) Int. Cl.: B60R 25/00, B60R 25/04, E05B 49/00

(54) **SYSTEME DE SECURITE POUR VEHICULE AUTOMOBILE**
SICHERHEITSSYSTEM FÜR KRAFTFAHRZEUGE
SECURITY SYSTEM FOR MOTOR VEHICLE

(30) Priorité: 30.07.1999 FR 9909967
(43) Date de publication de la demande: 02.05.2002
(73) Titulaire: TRW ITALIA S.p.A., 25063 Gardone Valtrompia (IT)
(72) Inventeur: BETTAN, Philippe, F-92008 Nanterre Cedex (FR)
(74) Mandataire: Jorio, Paolo, Dr. Ing.
(86) Numéro de dépôt international: PCT/FR2000/002159
(87) Numéro de publication internationale: WO 2001/008942

(56) Documents cités:
- EP-A- 0 767 286
- DE-A- 19 653 113
- FR-A- 2 755 925

## Description

La présente invention concerne les systèmes de sécurité pour véhicules.

Dans leur forme la plus élaborée à l'heure actuelle, ces systèmes permettent :
- d'une part de verrouiller et de déverrouiller les portes par télécommande en radiofréquence, à l'aide d'un organe portable de télécommande, fixé à une dé mécanique ou intégré à elle,
- d'autre part de mettre en état de fonctionner les éléments nécessaires à la conduite (verrou de direction et calculateur de contrôle moteur).

Les composants montés sur le véhicule sont répartis en trois sous-ensembles disposés à des emplacements différents :
- un récepteur radiofréquence, placé dans le véhicule à un endroit tel que le champ radioélectrique créé par l'excitation de l'organe de télécommande ait une valeur suffisante dès que cet organe est à une dizaine de mètres,
- un émetteur-récepteur, généralement combiné à l'antivol mécanique classique, par exemple sous forme d'une bague qui entoure cet antivol, dont les échanges avec l'organe portable s'effectuent à plus basse fréquence, et
- un boîtier central, relié par câbles et connecteurs aux sous-ensembles précédents, destiné à traiter les signaux reçus, notamment en les décodant, et à envoyer des signaux d'interrogation.

Le document EP 0 767 286 décrit un système selon le préambule de la revendication 1a.

Le document FR - A - 2 755 925 décrit un système de sécurité ayant deux branches reliées à une même antenne pouvant être placée à proximité de la serrure de direction. Une de ces deux branches comporte un récepteur radio-fréquence de réception d'un signal d'ouverture de porte. L'autre comporte un émetteur - récepteur à plus basse fréquence en vue de la fonction d'anti-démarrage.

L'invention vise notamment à fournir un système dans lequel le nombre des sous-ensembles est réduit à deux, ce qui permet notamment de réduire le nombre de liaisons par. câbles et connecteurs, et cela sans pour autant avoir un effet défavorable sur les possibilités de la télécommande, qui utilise une porteuse à plusieurs centaines de MHz, alors que le transpondeur assurant la fonction d'anti-démarrage fonctionne généralement dans la plage des 100 kHz.

Pour arriver à ce résultat, l'invention utilise deux faits : le récepteur radiofréquence et l'émetteur-récepteur basse-fréquence ne sont jamais utilisés simultanément, et l'émetteur-récepteur fonctionne à une fréquence suffisamment plus basse que le récepteur pour que les voies puissent être aisément séparées par des filtres fréquentiels.

L'invention propose en conséquence un système de sécurité caractérisé en ce que l'émetteur-récepteur BF et le récepteur radio-fréquence sont disposés sur le boîtier de verrouillage mécanique de direction et sont munis d'une bobine commune formant antenne, reliée à l'émetteur-récepteur BF et au récepteur radiofréquence par des filtres fréquentiels respectifs. Ils sont reliés au boîtier central par un même câble.

Cette disposition permet un gain de place et de prix important. Le boîtier de verrouillage de direction constitue un emplacement adapté à la réception des signaux à la fréquence de porteuse de plusieurs centaines de MHz utilisée pour la télécommande d'ouverture et de fermeture des portes.

L'ensemble des éléments constitutifs du récepteur radiofréquence et de l'émetteur-récepteur peuvent être regroupés dans une bague entourant le verrou mécanique placé sur la colonne de direction. La bobine commune, coaxiale à la bague, est reliée au circuit radiofréquence par un filtre fréquentiel présentant une impédance à la fréquence de fonctionnement du récepteur très faible. Le circuit d'entrée de l'émetteur-récepteur BF peut être par exemple constitué par un filtre de bande présentant une impédance forte aux fréquences élevées.

Les caractéristiques ci-dessus ainsi que d'autres apparaîtront mieux à la lecture de la description qui suit d'un mode particulier de réalisation, donné à titre d'exemple non limitatif. La description se réfère aux figures qui l'accompagnent, dans lesquelles :
- la figure 1 est un schéma synoptique de principe du système ;
- la figure 1A est un schéma simplifié montrant les moyens de commutation ;
- la figure 2 est un organigramme de fonctionnement, correspondant à la mise en oeuvre successive du système pour provoquer le déverrouillage des portes, puis le démarrage ;
- la figure 3 montre une variante de réalisation de la bobine commune.

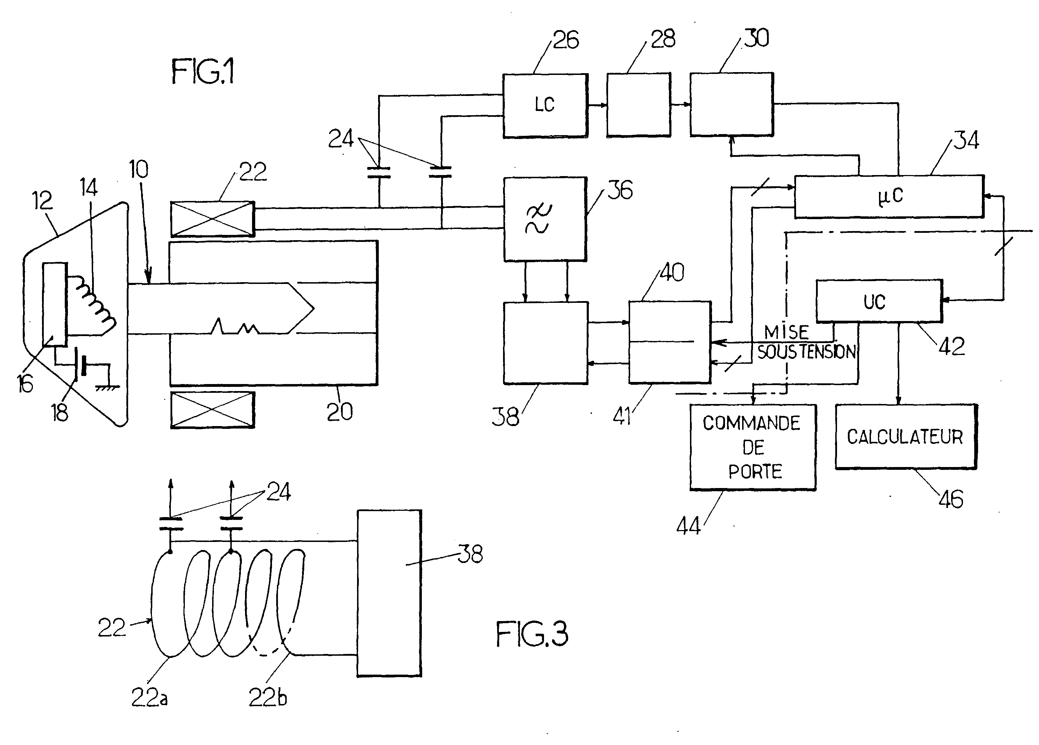

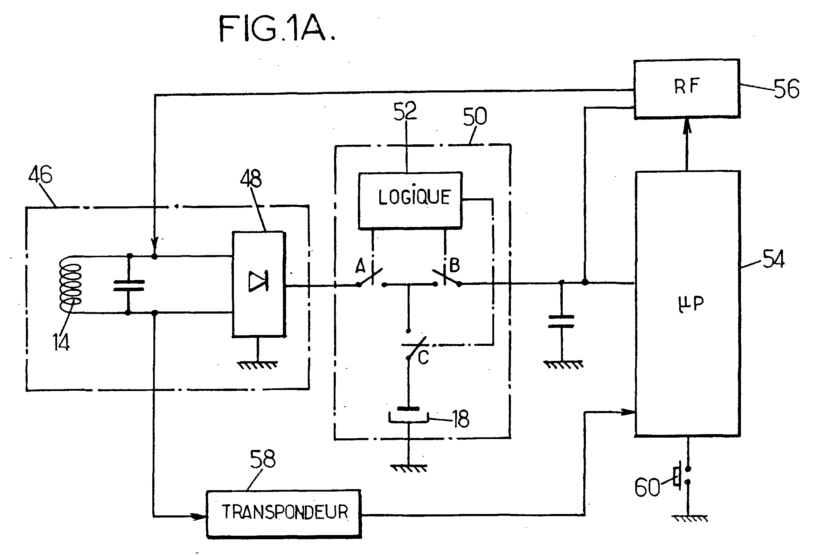

Le système dont la constitution de principe est montrée en figure 1 comporte une clé mécanique de direction 10 dont le fût est solidaire d'une capsule 12 dans laquelle sont noyés un bobinage ou une boucle 14 constituant antenne, une carte électronique 16 et une source à basse tension 18. Cette source peut être une pile. La capsule présente une paroi souple constituant interrupteur d'excitation de la carte 16 pour provoquer l'émission répétitive d'une porteuse à radiofréquence modulé suivant un code propre au véhicule, ou un jeu de plusieurs interrupteurs correspondant à des fonctions différentes.

La carte 16 est également prévue pour réagir à une interrogation par l'envoi d'une réponse, qui peut se représenter comme une modulation du champ émis.

La partie du système portée par le véhicule comporte le verrou de direction 20, placé sur la colonne de direction, et une partie électronique.

Cette partie électronique comporte deux voies ayant un élément d'entrée commun, constitué par une bobine 22 placée de façon telle qu'elle soit à proximité du bobinage 14 lorsque la clé est insérée dans le verrou. En général, la bobine 22 sera placée dans une bague qui entoure le verrou et qui contient l'ensemble des composants spécifiques au système, à l'exclusion d'un boîtier central 42

La première voie est destinée à traiter les commandes à radiofréquence. Elle est reliée à la bobine 22 par une liaison, dont l'impédance est faible à la radiofréquence (par exemple par des condensateurs de quelques picoFarads) généralement prévue pour la télécommande, qui est à l'heure actuelle de 433 MHz ou 315 MhZ en Europe et sera de 868 MHz ou 915 MhZ dans un proche avenir. La voie radiofréquence comporte ensuite un circuit d'adaptation d'impédance 26, puis éventuellement un filtre de sélection 28. Le filtre 28 peut être un filtre à ondes de surface. Il ne livre passage qu'aux signaux présentant une fréquence porteuse du genre utilisé pour la télécommande de porte. Cette partie peut être la même pour tous les véhicules d'un même modèle. Le signal à radiofréquence fourni par le filtre 28 est appliqué, après adaptation d'impédance, à un récepteur démodulateur 30. La sortie du circuit 30 fournit les données contenues dans le signal radiofréquence, à une cadence de quelques kbits par seconde ; ces données sont appliqués à un micro-contrôleur 34. Les composants 26 à 30 peuvent être regroupés sur un même circuit imprimé, alors que le microcontrôleur peut être monté sur une carte-mère, selon le volume disponible.

La figure 1 ne montre pas l'alimentation à partir de la batterie du véhicule. Le micro-contrôleur est alimenté en permanence. Il commande l'alimentation du circuit 30 aussi longtemps que la seconde voie n'est pas alimentée.

La seconde voie est destinée au dialogue en basse fréquence. Elle comporte un filtre d'entrée 36, ayant une self de choc, dont l'impédance est fonction croissante de la fréquence, de façon à être très élevée à la fréquence de fonctionnement de la première voie. Ce filtre est suivi d'un circuit d'accord 38 et d'un circuit 40 ayant un démodulateur fournissant des données numériques au micro-contrôleur 34 du véhicule.

Le micro-contrôleur est prévu pour provoquer l'alimentation de la seconde voie dès que la clé 10 est introduite dans le verrou et tournée d'un cran, c'est-à-dire amenée dans la position qui déclenche l'interrogation liée à l'autorisation de démarrage. Pour cela, le verrou comporte un interrupteur électrique, non représenté, relié au micro-contrôleur.

Le micro-contrôleur est lui-même relié à l'unité centrale 42 du véhicule qui contrôle les moteurs 44 de verrouillage et de déverrouillage des portes en réponse aux commandes à radiofréquence, rend opérationnel le calculateur de contrôle moteur 46 lorsqu'il identifie les données reçues du circuit démodulateur 40 comme correspondant à un code stocké dans une mémoire protégée en lecture et en écriture. Ce code peut être évolutif de façon cyclique ou crypté pour le rendre difficilement piratable.

Au circuit 40 est associé un émetteur-récepteur 41 permettant d'interroger la carte 16. Dans ce mode de fonctionnement, la carte 16 est passive (en ce sens qu'elle ne fait pas appel à la source 18).

Les éléments montés dans la clé 10 peuvent être considérés comme ayant :
- un sous-ensemble antenne-redresseur 46, comprenant le bobinage 14 suivi d'un redresseur 48 capable de fournir une puissance électrique continue en sortie ;
- un sous-ensemble 50 de gestion d'énergie comprenant trois interrupteurs ;
- généralement, des transistors A, B et C commandés par une logique 52.

Ces interrupteurs permettent :
- de mettre en liaison le redresseur 48 avec l'accumulateur ou la capacité 18 pour la recharger (interrupteurs A et C fermés) ;
- d'alimenter en énergie un microprocesseur 54 et un émetteur RF 56 à partir du redresseur (A et B fermés) ou ä partir de la source 18 (B et C fermés).

Un transpondeur 58 assure également des fonctions de modulation et de démodulation.

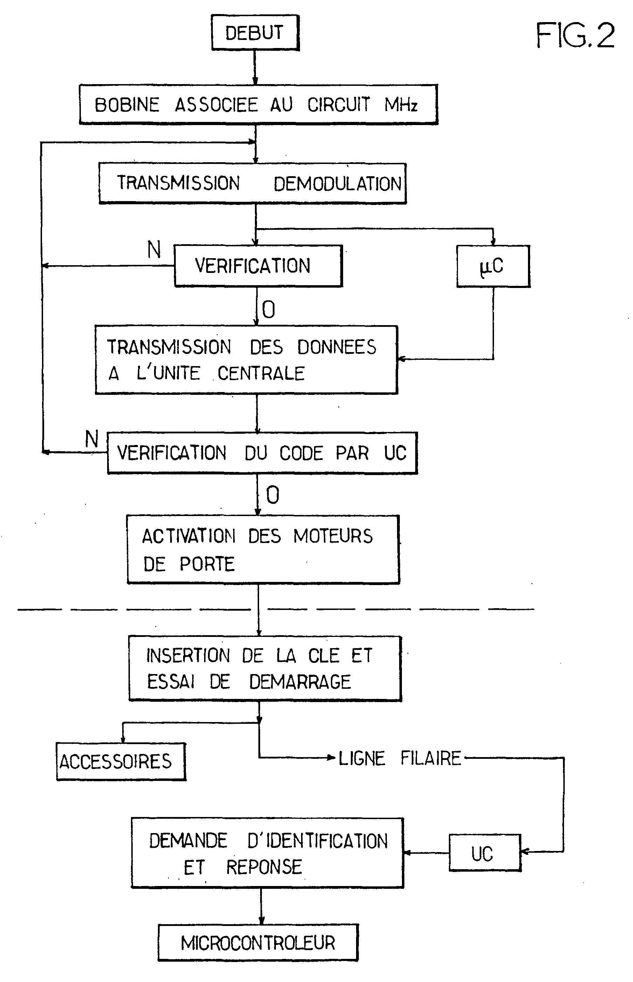

Le fonctionnement du système au cours d'une séquence de déverrouillage des portes, puis de mise en route du moteur, peut être celui montré en figure 2.

Au repos, la bobine 14 est associée à l'émetteur radiofréquence 56. Lorsque l'utilisateur appuie sur un bouton-poussoir d'interrupteur de clé 60, il provoque l'émission d'une porteuse radiofréquence modulée suivant un code évolutif ou crypté.

Le signal RF reçu par la bobine 22 est orienté vers la voie radiofréquence. Le code démodulé est adressé à l'unité centrale 48 par le micro-contrôleur 34. Une vérification est en même temps effectuée pour déterminée si le type de signal reçu est susceptible de constituer un code de déverrouillage. L'unité centrale 42 compare le code à celui qu'elle a en mémoire et active les moteurs de porte en cas de coïncidence.

L'utilisateur insère ensuite sa clé dans la serrure et fait une tentative de démarrage. L'insertion mécanique et la rotation mettent en route les accessoires éventuels dès l'arrivée de la clé au premier cran. Le passage de la clé au second cran transmet à l'unité centrale, par une ligne filaire, un signal. En réponse, l'unité centrale provoque la mise sous tension de la voie à basse fréquence et la coupure de l'alimentation sur la voie radiofréquence, puis la séquence d'identification, qui fait intervenir le micro-contrôleur 34.

La séquence peut par exemple être la suivante :
- émission, par le circuit 41, d'une interrogation, par exemple sous forme d'un champ radioélectrique à 125 kHz, appliquée par la bobine 22 à la boucle 14,
- envoi d'une réponse correspondant à l'interrogation, élaborée par le micro-processeur 54,
- analyse de cohérence par le micro-contrôleur 34 et transmission à l'unité centrale 42,
- vérification du code par l'unité centrale 42 et validation du calculateur contrôle moteur.

L'interrogation et la réponse, souvent désignés par les termes anglais "challenge and response", utilisent avantageusement des codes qui évoluent, par exemple de façon cyclique ou cryptée, d'une séquence à la suivante, pour renforcer la sécurité.

Dans la clé 10, les interrupteurs sont commandés par la logique 52 pour être dans les états suivants :
- repos : B et C fermés, A ouvert ;
- émission RF; lors de l'appui sur le bouton 60 de la clé, B et C fermés ;
- émission par le transpondeur : A et B seuls fermés ;
- recharge éventuelle pendant que la clé est sur le verrou : A et C fermés.

L'invention est susceptible de nombreuses variantes de réalisation. Par exemple, la figure 3 montre une bobine 22 constituée d'une fraction 22a de quelques spires seulement, alimentant la voie radiofréquence, et une seconde fraction 22b, ayant un beaucoup plus grand nombre de spires, permettant d'alimenter la voie basse fréquence.

## Revendications

1. Système de sécurité pour véhicule automobile, comprenant :
- un récepteur radiofréquence (30), placé dans le véhicule à un endroit tel que le champ radioélectrique créé par l'excitation d'un organe portatif de tétécommande (10) ait une valeur suffisante dès que cet organe est à une dizaine de mètres,
- un émetteur-récepteur (41) dont les échanges avec l'organe portatif (10) s'effectuent à plus basse fréquence, et
- un boîtier central (42), relié par câbles et connecteurs aux sous-ensembles précédents, destiné à traiter les signaux reçus, notamment en les décodant, et à envoyer des signaux d'interrogation,
**caractérisé en ce que** l'émetteur-récepteur (41) et le récepteur radiofréquence (30) sont disposés sur un boîtier de verrouillage mécanique de direction (20) prévu pour recevoir l'organe de télécommande (10) et sont munis d'une bobine commune (22) formant antenne de communication avec l'organe de télécommande, reliée à l'émetteur-récepteur (41) et au récepteur radio-fréquence (20) par des filtres fréquentiels (26,38) respectifs.

2. Système suivant la revendication 1, **caractérisé en ce que** les éléments constitutifs du récepteur radiofréquence (30) et de l'émetteur-écepteur (41) sont regroupés dans une bague entourant le boîtier de verrouillage mécanique de direction.

3. Système suivant la revendication 1 ou 2, **caractérisé en ce que** la bobine commune (22), coaxiale à la bague, est reliée au récepteur radiofréquence par un filtre fréquentiel (24) présentant une impédance à la fréquence de fonctionnement du récepteur faible.

4. Système suivant la revendication 3, **caractérisé en ce que** le circuit d'entrée (38) de l'émetteur-récepteur (41) est constitué par un filtre à self-inductance de choc.

5. Système suivant la revendication 1, 2 ou 3, **caractérisé en ce que** l'émetteur-récepteur (41) est prévu pour dialoguer avec l'organe de télécommande (10) suivant un code évolutif ou crypté.

6. Système suivant la revendication 5, **caractérisé en ce que** la carte de l'organe de télécommande comporte un transpondeur (58) destiné à dialoguer avec l'émetteur-récepteur (41).

7. Système selon la revendication 1 ou 2, **caractérisé en ce que** la bobine commune (22) est constituée d'une fraction (22a) de quelques spires seulement, alimentant la voie radiofréquence, et une seconde fraction 22b, ayant un beaucoup plus grand nombre de spires, permettant d'alimenter la voie à plus basse fréquence.

8. Système suivant l'une quelconque des revendications précédentes, **caractérisé en ce que** l'organe de télécommande comporte une clé de verrouillage mécanique et **en ce que** le boîtier central est prévu pour couper l'alimentation du récepteur radiofréquence (30) et provoquer la mise sous tension de la voie à plus basse fréquence en réponse au déverrouillage par la clé.

9. Système selon la revendication 8, **caractérisé en ce que** l'organe de télécommande (10) comporte une capsule contenant un bobinage ou une boucle (14) constituant antenne, une carte électronique, une source à basse tension et au moins un interrupteur de commande de la carte pour provoquer rémission à radiofréquence.

## Claims

1. A motor vehicle security system comprising:
- a radiofrequency receiver (30) disposed in the vehicle at a location such that the radioelectric field produced by the excitation of a portable remote-control member (10) has a sufficient value as soon as said member is at a distance of some ten metres,
- a transceiver (41) of which the exchanges with the portable member (10) are effected at a lower frequency, and
- a central box (42) connected by cables and connectors to the above sub-assemblies and intended to process the received signals, inter alia by decoding them, and to transmit interrogation signals,
**characterised in that** the transceiver (41) and the radiofrequency receiver (30) are disposed on a mechanical steering locking box (20) adapted to receive the remote-control member (10) and are provided with a common coil (22) forming an antenna for communication with the remote-control member, connected to the transceiver (41) and to the radiofrequency receiver (30) by respective frequency filters (26, 38).

2. A system according to claim 1, **characterised in that** the constituent elements of the radiofrequency receiver (30) and of the transceiver (41) are combined in a ring surrounding the mechanical steering locking box.

3. A system according to claim 1 or 2, **characterised in that** the common coil (22) coaxial with the ring is connected to the radiofrequency receiver by a frequency filter (24) having a low receiver operating frequency impedance.

4. A system according to claim 3, **characterised in that** the input circuit (38) of the transceiver (41) consists of a self-inductance surge filter.

5. A system according to claim 1, 2 or 3, **characterised in that** the transceiver (41) is adapted to dialogue with the remote-control member (10) in accordance with an evolutive or encrypted code.

6. A system according to claim 5, **characterised in that** the remote-control member card comprises a transponder (58) adapted to dialogue with the transceiver (41).

7. A system according to claim 1 or 2, **characterised in that** the common coil (22) consists of a fraction (22a) of just a few turns supplying the radiofrequency channel, and a second fraction (22b) having a much larger number of turns enabling the lower frequency channel to be supplied.

8. A system according to any one of the preceding claims, **characterised in that** the remote-control member comprises a mechanical locking key and **in that** the central box is adapted to cut off the supply of the radiofrequency receiver (30) and cause voltage to be applied to the lower frequency channel in response to unlocking by the key.

9. A system according to claim 8, **characterised in that** the remote-control member (10) comprises a capsule containing a winding or a loop (14) forming an antenna, an electronic card, a low-voltage source, and at least one card control switch to cause transmission at radiofrequency.

## Patentansprüche

1. Sicherheitssystem für ein Kraftfahrzeug, mit:
- einem Radiofrequenzempfänger (30), der in dem Fahrzeug an einer solchen Stelle angeordnet ist, dass das durch Erregung eines tragbaren Fernbedienungsorgans (10) geschaffenes elektrisches Feld einen ausreichenden Wert hat, wenn dieses Organ an die zehn Meter entfernt ist,
- einem Sender-Empfänger (41), dessen Kommunikation mit dem tragbaren Organ (10) bei niedrigerer Frequenz erfolgt, und
- einem zentralen Gehäuse (42), das durch Kabel und Verbinder mit vorhergehenden Untereinheiten verbunden ist und dazu dient, die empfangenen Signale zu verarbeiten, insbesondere zu dekodieren, und Abfragsignale auszusenden,
**dadurch gekennzeichnet, dass** der Sender-Empfänger (41) und der Radiofrequenzempfänger (30) auf einem Gehäuse einer mechanischen Lenkverriegelung (20) zum Aufnehmen des Fernbedienungsorgans (10) angeordnet und mit einer gemeinsamen Spule (22) versehen sind, die eine Antenne zur Kommunikation mit dem Fernbedienungsorgan bildet und mit dem Sender-Empfänger (41) und mit dem Radiofrequenzempfänger (20) durch entsprechende Frequenzfilter ( 26, 38) verbunden ist.

2. System nach Anspruch 1, **dadurch gekennzeichnet, dass** die den Radiofrequenzempfänger (30) und den Sender-Empfänger (41) bildenden Elemente gruppenweise in einem Ring angeordnet sind, der das Gehäuse der mechanischen Lenkverriegelung umgibt.

3. System nach Anspruch 1 oder 2, **dadurch gekennzeichnet, dass** die gemeinsame Spule (22), die zu dem Ring koaxial ist, mit dem Radiofrequenzempfänger durch ein Frequenzfilter (24) verbunden ist, das eine bei der Betriebsfrequenz des Empfängers schwache Impedanz aufweist.

4. System nach Anspruch 3, **dadurch gekennzeichnet, dass** die Eingangsschaltung (38) des Sender-Empfängers (41) von einem Stoßfilter mit Selbstinduktion gebildet wird.

5. System nach Anspruch 1, 2 oder 3, **dadurch gekennzeichnet, dass** der Sender-Empfänger (41) dazu dient, einen Dialog mit dem Fernbedienungsorgan (10) nach einem entwickelbaren oder verschlüsselten Code zu führen.

6. System nach Anspruch 5, **dadurch gekennzeichnet, dass** die Karte des Fernbedienungsorgans einen Transponder (58) aufweist, der zum Dialogisieren mit dem Sender-Empfänger (41) dient.

7. System nach Anspruch 1 oder 2, **dadurch gekennzeichnet, dass** die gemeinsame Spule (22) gebildet wird von einem den Radiofrequenzpfad speisenden Teil (22a) der nur einige Wicklungen hat, und einem zweiten Teil (22b), der eine sehr viel größere Anzahl von Wicklungen hat und eine Speisung des Pfades mit niedrigerer Frequenz erlaubt.

8. System nach einem der vorhergehenden Ansprüche, **dadurch gekennzeichnet, dass** das Fernbedienungsorgan einen Schlüssel der mechanischen Verriegelung aufweist und dass das zentrale Gehäuse dazu dient, die Versorgung des Radiofrequenzempfängers (30) zu unterbrechen und den Pfad niedrigerer Frequenz in Abhängigkeit von einer Verriegelung durch den Schlüssel unter Spannung zu setzen.

9. System nach Anspruch 8, **dadurch gekennzeichnet, dass** das Fernbedienungsorgan (10) aufweist: eine Kapsel, die eine Spule oder Schleife (4) enthält, welche eine Antenne bildet, eine elektronische Karte, eine Niederspannungsquelle und mindestens einen Schalter zum Steuern der Karte zwecks Auslösen des Sendens mit Radiofrequenz.
